# EUROPEAN PATENT SPECIFICATION

(11) **EP 3 475 166 B1**
(45) Date of publication and mention of the grant of the patent: **23.09.2020**
(21) Application number: 17772136.2
(22) Date of filing: 14.06.2017
(51) Int. Cl.: B64D 1/06

(54) **A CARRIAGE SYSTEM**
BEFÖRDERUNGSSYSTEM
SYSTÈME TRANSPORTEUR

(30) Priority: 28.06.2016 TR 201609024
(43) Date of publication of application: 01.05.2019
(73) Proprietor: Tusas- Turk Havacilik Ve Uzay Sanayii Anonim Sirketi, 06980 Kazan/Ankara (TR)
(72) Inventor: ERTONG, Lutfi, 06980 Kazan/Ankara (TR)
(74) Representative: Cayli, Hülya
(86) International application number: PCT/TR2017/050262
(87) International publication number: WO 2018/004500

(56) References cited:
- EP-A1- 0 062 581
- EP-A1- 2 036 849
- US-A- 2 365 409
- US-A- 4 754 686
- US-B1- 8 127 655

## Description

### Field of the Invention

The present invention relates to a carriage system which is suitable for use in air vehicles such as aircrafts, and which is capable of safely carrying a load by being attached thereto.

### Background of the Invention

The delicate loads such as bombs, weapons may need to be carried from one place to another by air vehicles such as an aircraft. Therefore, the air vehicles that are used especially in defence industry have various carriage systems for attachment of said loads to them.

An exemplary bomb release mechanism for these carriage systems is disclosed in patent document no. US 8127655B1. Said mechanism comprises hooks for engaging a store; a primary part for locking one of the hooks in its closed position; a secondary part which can slide on the primary part and locks the primary part; a fastener with a guide in which the end of the secondary part that is far from the end where it contacts the primary part moves; and an actuator for moving said hooks. When the pressure on the primary part and the hook disappears, the store is released. However, the mechanism disclosed in this document is not capable of preventing unintentional self-opening of the hook, and thus it cannot provide a safe carriage system.

Another device for these carriage systems is disclosed in patent document no. US 4754686A. Said device is used for releasing loads carried underneath of the aircraft and, more particularly, for releasing the projectiles comprising firing fuses. This device comprises a rotary extension shaft; a cam; an electromagnet, fixed in case, which has a mobile armature; a wire; a hook which retains the ring of the arming wire when the electromagnet acts; a spring, which is bear on a lever and raise an armature in the absence of electrical current; a catch, which pivots about the shaft and a finger, which is carried by the lever. Said the cam is designed for pushing the lever actuating the catch and for maintaining it in position of the lever. The device disclosed in this document is not capable of preventing unintentional opening of the wire, and thus it cannot provide a safe device.

### Brief Description of the Invention

With the present invention, there is provided a carriage system which is suitable for use in an air vehicle, and which is capable of safely carrying at least a load by being attached thereto. Said carriage system comprises at least one retaining member which is suitable for attaching at least a load thereto, and which can move between an open position and a closed position; at least one moving element for moving said retaining member between the open position and the closed position by means of at least one power source; at least a first spring which is connected at least on one side to the retaining member and at least on the other side to the carriage system, and which serves to keep the retaining member in the open position; at least one locking element which can make rotational movement around an axis passing through its center, which locks the retaining member in its closed position by contacting the retaining member at least on its one end in a position where it is rotated, and which is connected at least on the other end to at least a second spring that applies a force in reverse direction to the force applied on the retaining member by the first spring; and at least one guide member which has at least one slot in which at least one end of the retaining member can move linearly, and which is in connection with the locking element.

The carriage system developed according to the present invention provides a safe carriage of the loads by being attaching thereto, while enabling the load to be released actively from the carriage system by allowing manual intervention in case of any lock of the carriage system due to the reasons such as bad weather conditions or in case of cancellation of any mission. Therefore, there is provided a carriage system which is safer when compared to the carriage systems intended for carrying delicate loads known in the art.

### Object of the Invention

An object of the invention is to develop a carriage system which is suitable for use in air vehicles such as aircrafts, and which is capable of attaching a load to an air vehicle and carrying the load safely.

Another object of the invention is to develop a carriage system wherein the unintentional release of the attached load due to movements such as vibrations, oscillations etc. that may occur during flight, is prevented.

Yet another object of the invention is to develop a carriage system wherein the load is released in a controlled and reliable manner, and locking in the load carrying mechanism is prevented.

Still another object of the invention is to develop a carriage system which allows for manual control in case of icing, pollution etc. occurring in its mechanism.

A further object of the invention is to develop a lightweight, safe and long-lasting carriage system.

### Description of the Drawings

Exemplary embodiments of the carriage system developed according to the present invention are illustrated in the attached drawings, wherein:
Figure 1 is a front view of an embodiment wherein the carriage system according to the present invention is attached to the load.
Figure 2 is a front view of an embodiment wherein the retaining members comprised by carriage system according to the present invention are in an open position.

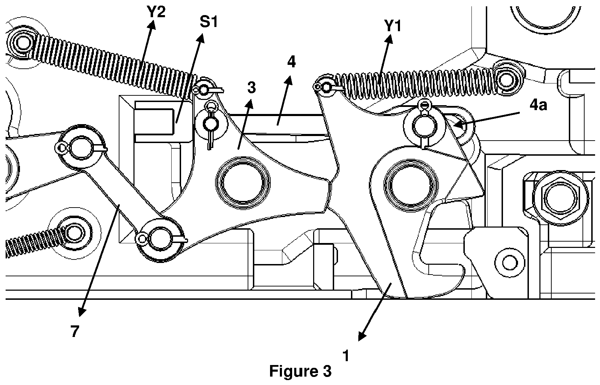

Figure 3 is a detailed front view of the locking element and the retaining member comprised by carriage system according to the present invention.

All the parts illustrated in the drawings are individually assigned a reference numeral and the corresponding terms of these numbers are listed as follows:

| | |
|---|---|
| Carriage system | (S) |
| First spring | (Y1) |
| Second spring | (Y2) |
| Third spring | (Y3) |
| Stopper | (S1) |
| Safety lock | (S2) |
| Retaining member | (1) |
| Moving element | (2) |
| Locking element | (3) |
| Guide member | (4) |
| Slot | (4a) |
| First part | (5) |
| Cam part | (6) |
| Second part | (7) |

### Description of Invention

It may be necessary to attach explosives such as bombs, weapons and similar loads to air vehicles so as to carry them from one place to another. Since said loads are delicate and pose a danger on the environment, it must be ensured that they are safely carried during flight. However, a carriage system to which the loads are attached may get locked in particularly due to severe weather conditions, and thus it may not be possible to release the loads from the system when desired. Therefore, with the present invention, there is provided a carriage system which allows for manual control to release the loads under bad weather conditions or in case of cancellation of a mission, while providing a safe carriage of the loads.

The carriage system (S) developed according to the present invention, which allows for attaching at least a load thereto and carrying the load safely, is suitable for use in an air vehicle, the system comprising at least one retaining member (1) preferably in form of a hook which is suitable for attaching at least a load thereto, and which is movable between an open position (the position in which the load is not attached) and a closed position (the position in which the load is attached); at least one moving element (2), preferably a pneumatic piston, which can move said retaining member (1) between the open position and the closed position by means of at least one power source (e.g. high pressure gas); at least a first spring (Y1) which is connected at least on one side to the retaining member (1) and at least on the other side to the carriage system (S), and which serves to keep the retaining member (1) in the open position; at least one locking element (3) which can make rotational movement around an axis passing through its center, which locks the retaining member (1) in its closed position by contacting the retaining member (1) at least on its one end in a position where it is rotated, and which is connected at least on the other end to at least a second spring (Y2) that applies a force in reverse direction to the force applied on the retaining member (1) by the first spring (Y1); and at least one guide member (4) which has at least one slot (4a) in which at least one end of the retaining member (1) can move linearly, and which is in connection, at least on the other portion thereof positioned so as to be close to preferably the second spring (Y2), with the locking element (3).

In an exemplary embodiment of the invention, the carriage system (S) is arranged such that the retaining member (1) thereof is attached to at least one extension of the load. When the retaining member (1), which is initially in an open position, is brought to a proper position for attachment to the load, the load rests on the retaining member (1) so that member (1) is brought to a closed position and the load is attached to the air vehicle. Since the first spring (Y1) and the second spring (Y2) apply force in reverse direction to each other, it is ensured that the retaining member (1) in the closed position as well as the locking member (3) which is in contact with it are kept locked. Thus, unintentional release of the load from the carriage system (S) due to vibrations is prevented. When it is desired to remove the load from the carriage system (S), the moving element (2) actuated by the power source causes rotation of the locking element (3) around an axis passing through its center. The locking element (3) releases the retaining member (1) by this rotational movement. On the other hand, when a problem arises in operation of the carriage system (S) due to environmental conditions such as frost or pollution or in case of cancellation of a mission, the retaining member (1) is able to be brought to an open position manually so as to release the load. For this purpose, the retaining member (1) is enabled to move by moving the end of the retaining member (1) that is placed in the slot (4a). Therefore, the retaining element is brought to the open position and kept in this position by the help of the first spring (Y1).

The carriage system (S) of the present invention comprises at least one stopper (S1) which is detachable from the carriage system (S), which contacts the locking element (3) preferably on its portion that is close to the end connected to the second spring (Y2), and which applies a force on the locking element (3) so as to bring the retaining member (1) to a closed position, in order to prevent the locking element (3), which is in contact with the retaining member in its closed position where the retaining member (1) is attached to the load, from releasing the retaining member (1). The stopper (S1) ensures that the position, where the locking element (3) is in contact with the retaining member (1), is maintained by contacting the locking element (3) after the retaining member (1) is attached to the load.

In a preferred embodiment of the invention, the axis around which the retaining member (1) rotates and the axis around which the locking element (3) rotates are on the same horizontal plane (in alignment), and said horizontal plane is parallel to the ground of the air vehicle. By virtue of the fact that said parts are arranged on the same plane on the carriage system (S), the carriage system (S) is used efficiently so as to make room for the power source. Thus, a lightweight and economical carriage system (S) is achieved.

In an alternative embodiment of the invention, the surface of the retaining member (1) contacted by the locking element (3) and the surface of the locking element (3) contacting the surface of the retaining member (1) are such surfaces that are compatible with each other, preferably in a cylindrical form. In this manner, while the locking element (3) is rotating by the actuation of the moving element (2), the locking element (3) contacts the retaining member (1), and said surfaces slide on each other due to the cylindrical structure of the contacting surfaces. Thus, both the locking process is performed in a smooth and uninterrupted manner, and also the retaining member (1) can be easily moved within the slot (4a) when the mechanism encounters an unfavorable situation such as frost. In this manner, the load is disconnected from the carriage system (S) without posing any danger.

In another preferred embodiment of the invention, the carriage system (S) comprises two retaining members (1), two locking elements (3), two guide members (4), two first springs (Y1) connected with the retaining members (1) and two second springs (Y2) connected with the locking elements (3), which are all arranged so as to be symmetrical with respect to an axis passing through the moving element (2). In an embodiment, to prevent rotation of the retaining members (1) due to the moments that may occur on the moving element (2) during movement of the retaining members (1), the carriage system (S) comprises at least one movement blocking member (not shown in the figures) having at least one housing in which the moving element (2) is positioned. Thanks to the movement blocking member, the retaining members (1) are activated, while the moving element (2) is prevented from rotating on its axis due to the moment occurring on the moving element (2).

In another preferred embodiment of the invention, the carriage system (S) comprises at least a first part (5), which is contacted by the moving element (2) as the moving element (2) moves, which is preferably connected to an air vehicle from a point passing through its center, and which can make rotational movement around this point. In this embodiment, the carriage system (S) comprises at least one cam part (6) which contacts the first part (5), preferably on its bottom part that is close to the ground of the air vehicle. The cam part (6) is brought, in the closed position of the retaining member (1), to an active state in which it is perpendicular to the ground of the carriage system (S) so that the retaining member (1) is prevented from being brought to the open position again. The cam part (6) is in connection with at least a third spring (Y3) preferably on its other end that is far from the end with which it contacts the first part (5). The third spring (Y3) applies a force on the cam part (6) such that it remains in its closed position (in other words, in the position where the retaining member (1) is in an open position).

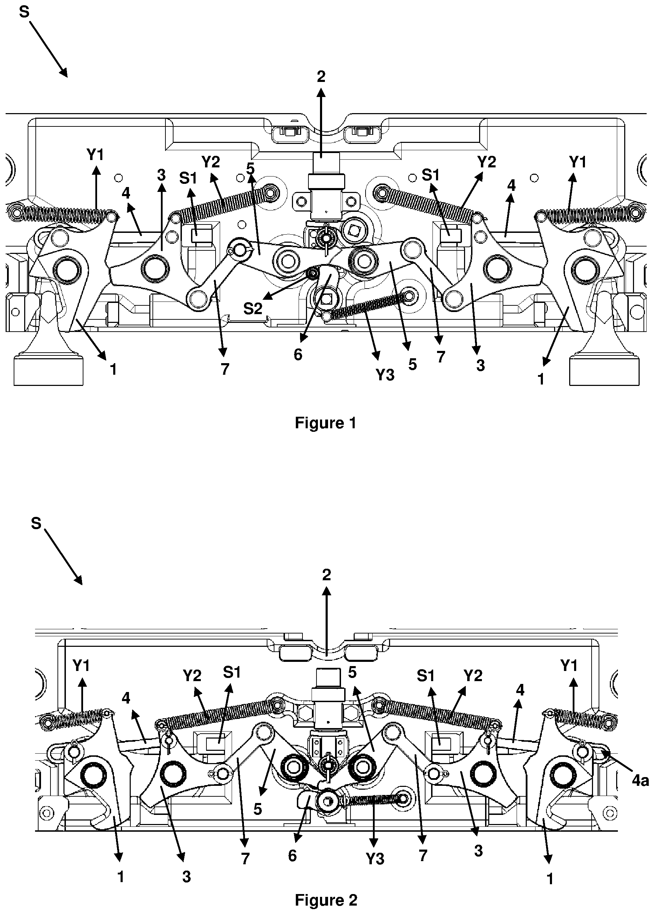

In another alternative embodiment, as illustrated in Figure 1, of the invention, the carriage system (S) comprises at least one safety lock (S2), which is contacted by the cam part (6) when the retaining member (1) is in its closed position, to prevent intentional or unintentional release of the load after the air vehicle is loaded. The safety lock (S2) is detached from the carriage system (S) before the flight, and thus the position of the cam part (6) can be changed. The third spring (Y3) prevents the cam part (6) from being brought back to the position securing the carriage system (S) (in other words, to the position where the retaining member (1) is closed) after the safety lock (S2) is removed.

In an embodiment of the invention where the first part (5) is comprised, the carriage system (S) further comprises at least a second part (7), which is connected at least on one end to the first part (5) and at least on the other end to the locking element (3), and which enables the locking element (3) to rotate by rotational movement of the first part (5) and thus leads the retaining member (1) to be brought to an open position.

The carriage system (S) developed with the present invention provides a safe carriage of the loads by being attaching thereto, while enabling the load to be released actively from the carriage system by allowing manual intervention in case of any lock of the carriage system (S) due to the reasons such as bad weather conditions or in case of cancellation of any mission. Therefore, there is provided a carriage system (S) which is safer when compared to the carriage systems intended for carrying delicate loads that are known in the art.

## Claims

1. A carriage system (S), which is suitable for use in an air vehicle, which is capable of safely carrying at least a load by being attached thereto, and which comprises:
- at least one retaining member (1) which is suitable for attaching at least a load thereto, and which is movable between an open position and a closed position;
- at least one moving element (2) which ensures moving of said retaining member (1) between the open position and the closed position by means of at least one power source;
- at least a first spring (Y1), which is connected at least on one side to the retaining member (1) and at least on the other side to the carriage system (S), and which serves to keep the retaining member (1) in the open position;
- at least one locking element (3), which can make rotational movement around an axis passing through its center, which locks the retaining member (1) in its closed position by contacting the retaining member (1) at least on its one end in a position where it is rotated, and which is connected at least on the other end to at least a second spring (Y2) that applies a force in a reverse direction to the force applied by the first spring (Y1) on the retaining member (1);
wherein the moving element (2) is configured to, actuated by the power source, cause rotation of the locking element (3), the locking element (3) releasing the retaining member (1) by this rotational movement, the carriage system (S) being **characterized by** comprising
- at least one guide member (4), which has at least one slot (4a) in which at least one end of the retaining member (1) can move linearly, and which is in connection with the locking element (3).

2. A carriage system (S) according to Claim 1, **characterized in that** said retaining member (1) is in the form of a hook.

3. A carriage system (S) according to Claim 1, **characterized in that** said power source is in the form of a high pressure gas.

4. A carriage system (S) according to Claim 1, **characterized in that** said moving element (2) is a pneumatic piston.

5. A carriage system (S) according to Claim 1, **characterized by** comprising at least one stopper (S1), which is detachable from the carriage system (S), which contacts the locking element (3), and which applies a force on the locking element (3) such that the locking element (3) brings the retaining member (1) to a closed position, to prevent the locking element (3) which is in contact with the retaining member in its closed position where the retaining member (1) is attached to the load, from releasing the retaining member (1).

6. A carriage system (S) according to Claim 1, **characterized in that** the axis around which the retaining member (1) rotates and the axis around which the locking element (3) rotates are on the same horizontal plane, which in use is parallel to the ground of the air vehicle.

7. A carriage system (S) according to Claim 1, **characterized in that** the surface of the retaining member (1) contacted by the locking element (3) and the surface of the locking element (3) contacting said surface of the retaining member (1) are compatible with each other.

8. A carriage system (S) according to Claim 7, **characterized in that** the surface of the retaining member (1) contacted by the locking element (3) and the surface of the locking element (3) contacting said surface of the retaining member (1) are in a cylindrical form.

9. A carriage system (S) according to Claim 1, **characterized by** comprising two retaining members (1), two locking elements (3), two guide members (4), two first springs (Y1) connected with the retaining members (1) and two second springs (Y2) connected with the locking elements (3), which are all arranged so as to be symmetrical with respect to an axis passing through the moving element (2).

10. A carriage system (S) according to Claim 9, **characterized by** comprising at least one movement blocking member having at least one housing in which the moving element (2) is positioned.

11. A carriage system (S) according to Claim 1, **characterized by** comprising at least a first part (5), which is contacted with the moving element (2) as the moving element (2) moves, which is configured to be connected to an air vehicle from a point, and which can make a rotational movement around said point.

12. A carriage system (S) according to Claim 11, **characterized by** comprising at least one cam part (6), which is brought, in the closed position of the retaining member, to an active state in which it is perpendicular to the ground of the carriage system so that the retaining member is prevented from being brought to the open position again, which contacts, on one side, the first part (5).

13. A carriage system (S) according to Claim 12, **characterized by** comprising at least one safety lock (S2) contacted by the cam part (6) when the retaining member (1) is in its closed position and preventing intentional or unintentional release of the load after the air vehicle is loaded.

14. A carriage system (S) according to Claim 11, **characterized by** comprising at least a second part (7), which is connected at least on one end to the first part (5) and at least on the other end to the locking element (3), and which enables the locking element (3) to rotate by the rotational movement of the first part (5).

## Patentansprüche

1. Trägersystem (S), das dazu in der Lage ist, eine daran befestigte Last sicher zu tragen, und das aufweist:
- wenigstens ein Halteelement (1), das dazu geeignet ist, eine Last zu halten, und das zwischen einer geöffneten Stellung einer geschlossenen Stellung beweglich ist,
- wenigstens ein bewegliches Element (2), das mittels wenigstens einer Energiequelle Bewegung des Halteelements (1) zwischen der geöffneten Stellung und der geschlossenen Stellung bewirkt,
- wenigstens eine erste Feder (Y1), die mit wenigstens einer Seite mit dem Halteelement (1) und mit wenigstens einer anderen Seite mit dem Trägersystem (S) verbunden ist und die dazu dient, das Halteelement (1) in der geöffneten Stellung zu halten,
- wenigstens ein Verschlusselement (3), das eine Drehbewegung um eine durch sein Zentrum verlaufende Achse ausführen kann, das das Halteelement (1) durch Kontaktieren des Halteelements (1) wenigstens an seinem einen Ende in einer Stellung, in der es gedreht ist, festhält und das wenigstens an dem anderen Ende mit wenigstens einer zweiten Feder (Y2) verbunden ist, die eine Kraft entgegengesetzt zu der durch die erste Feder (Y1) auf das Halteelement (1) ausgeübten Kraft ausübt,
wobei das bewegliche Element (2) dazu ausgestaltet ist, angetrieben durch die Energiequelle die Rotation des Verschlusselements (3) zu bewirken, wobei das Verschlusselement (3) das Halteelement (1) durch diese Drehbewegung freigibt, wobei das Trägersystem (S) **dadurch gekennzeichnet ist, dass** es aufweist
- wenigstens ein Führungselement (4), das wenigstens einen Schlitz (4a) hat, in dem sich wenigstens ein Ende des Halteelements (1) linear bewegen kann, und das in Verbindung mit dem Halteelement (3) steht.

2. Trägersystem (S) nach Anspruch 1, **dadurch gekennzeichnet, dass** das Halteelement (1) in der Form eines Hakens vorliegt.

3. Trägersystem (S) nach Anspruch 1, **dadurch gekennzeichnet, dass** die Energiequelle in der Form eines Hochdruckgases vorliegt.

4. Trägersystem (S) nach Anspruch 1, **dadurch gekennzeichnet, dass** das bewegliche Element (2) ein pneumatischer Kolben ist.

5. Trägersystem (S) nach Anspruch 1, **dadurch gekennzeichnet, dass** es wenigstens einen Stopper (S1) aufweist, der von dem Trägersystem (S) lösbar ist, der das Verschlusselement (3) kontaktiert und der auf das Verschlusselement (3) ein Kraft ausübt, so dass das Verschlusselement (3) das Halteelement (1) in eine geschlossene Stellung bringt, um das Verschlusselement (3), das in Kontakt mit dem Halteelement in seiner geschlossenen Stellung ist, in der das Halteelement (1) die Last festhält, daran zu hindern, das Halteelement (1) freizugeben.

6. Trägersystem (S) nach Anspruch 1, **dadurch gekennzeichnet, dass** die Achse, um die sich das Halteelement (1) dreht, und die Achse, um die sich das Verschlusselement (3) dreht, in derselben horizontalen Ebene liegen, die im Betrieb des Luftfahrzeugs parallel zum Boden ist.

7. Trägersystem (S) nach Anspruch 1, **dadurch gekennzeichnet, dass** die Oberfläche des Halteelements (1), die durch das Verschlusselement (3) kontaktiert wird, und die Oberfläche des Verschlusselements (3), die die Oberfläche des Halteelements (1) kontaktiert, miteinander kompatibel sind.

8. Trägersystem (S) nach Anspruch 7, **dadurch gekennzeichnet, dass** die Oberfläche des Halteelements (1), die von dem Verschlusselement (3) kontaktiert wird, und die Oberfläche des Verschlusselements (3), die die Oberfläche des Halteelements (1) kontaktiert, von zylindrischer Form sind.

9. Trägersystem (S) nach Anspruch 1, **dadurch gekennzeichnet, dass** es zwei Halteelemente (1), zwei Verschlusselemente (3), zwei Führungselemente (4), zwei erste Federn (Y1), die mit den Halteelementen (1) verbunden sind, und zwei zweite Federn (Y2) aufweist, die mit den Verschlusselementen (3) verbunden sind, die alle so angeordnet sind, dass sie symmetrisch zu einer durch das bewegliche Element (2) verlaufenden Achse angeordnet sind.

10. Trägersystem (S) nach Anspruch 9, **dadurch gekennzeichnet, dass** es wenigstens ein Bewegungsblockierungselement aufweist, das wenigstens ein Gehäuse hat, in dem das bewegliche Element (2) positioniert ist.

11. Trägersystem (S) nach Anspruch 1, **dadurch gekennzeichnet, dass** es wenigstens ein erstes Teil (5) aufweist, das von dem beweglichen Element (2), wenn sich das bewegliche Element (2) bewegt, kontaktiert wird, das dazu ausgestaltet ist, mit einem Luftfahrzeug an einem Punkt verbunden zu werden und das eine Drehbewegung um den Punkt ausführen kann.

12. Trägersystem (S) nach Anspruch 11, **dadurch gekennzeichnet, dass** es wenigstens ein Nockenelement (6) aufweist, das, in der geschlossenen Stellung des Halteelements, in einen aktiven Zustand gebracht wird, in dem es senkrecht zum Boden des Trägersystem ist, so dass das Halteelement daran gehindert wird, wieder in die geöffnete Stellung gebracht zu werden, das auf einer Seite das erste Teil (5) kontaktiert.

13. Trägersystem (S) nach Anspruch 12, **dadurch gekennzeichnet, dass** es wenigstens einen Sicherheitsverschluss (S2) aufweist, der von dem Nockenelement (6) kontaktiert wird, wenn das Halteelement (1) in seiner geschlossenen Stellung ist, und der eine beabsichtigte oder unbeabsichtigte Freigabe der Last, nachdem das Luftfahrzeug mit der Last beladen ist, verhindert.

14. Trägersystem (S) nach Anspruch 11, **dadurch gekennzeichnet, dass** es wenigstens ein zweites Teil (7) aufweist, das wenigstens an einem Ende mit dem ersten Teil (5) verbunden ist und wenigstens an dem anderen Ende mit dem Verschlusselement (3) verbunden ist und das das Verschlusselement (3) in die Lage versetzt, sich durch die Drehbewegung des ersten Teils (5) zu drehen.

## Revendications

1. Système de transport (S), qui est approprié pour être utilisé dans un véhicule aérien, qui est capable de transporter en toute sécurité au moins une charge qui lui est attachée, et qui comprend :
- au moins un organe de retenue (1) qui est approprié pour lui attacher au moins une charge, et qui est mobile entre une position ouverte et une position fermée ;
- au moins un élément de déplacement (2) qui assure un déplacement dudit organe de retenue (1) entre la position ouverte et la position fermée au moyen d'au moins une source de puissance ;
- au moins un premier ressort (Y1), qui est relié au moins sur un côté à l'organe de retenue (1) et au moins sur l'autre côté au système de transport (S), et qui sert à maintenir l'organe de retenue (1) à la position ouverte ;
- au moins un élément de verrouillage (3), qui peut effectuer un mouvement rotationnel autour d'un axe passant à travers son centre, qui verrouille l'organe de retenue (1) à sa position fermée en venant au contact de l'organe de retenue (1) au moins à son extrémité à une position à laquelle il est tourné, et qui est relié au moins à l'autre extrémité à au moins un second ressort (Y2) qui applique une force dans un sens inverse à la force appliquée par le premier ressort (Y1) sur l'organe de retenue (1) ;
dans lequel l'élément de déplacement (2) est configuré pour, en étant actionné par la source de puissance, provoquer une rotation de l'élément de verrouillage (3), l'élément de verrouillage (3) libérant l'organe de retenue (1) par ce mouvement rotationnel, le système de transport (S) étant **caractérisé en ce qu'**il comprend :
- au moins un organe de guidage (4), qui a au moins une fente (4a) dans laquelle au moins une extrémité de l'organe de retenue (1) peut se déplacer linéairement, et qui est en liaison avec l'élément de verrouillage (3).

2. Système de transport (S) selon la revendication 1, **caractérisé en ce que** ledit organe de retenue (1) est sous la forme d'un crochet.

3. Système de transport (S) selon la revendication 1, **caractérisé en ce que** ladite source de puissance est sous la forme d'un gaz à haute pression.

4. Système de transport (S) selon la revendication 1, **caractérisé en ce que** ledit élément de déplacement (2) est un piston pneumatique.

5. Système de transport (S) selon la revendication 1, **caractérisé en ce qu'**il comprend au moins une butée (S1), qui est détachable du système de transport (S), qui vient au contact de l'élément de verrouillage (3), et qui applique une force à l'élément de verrouillage (3) de sorte que l'élément de verrouillage (3) mette l'organe de retenue (1) à une position fermée, pour empêcher que l'élément de verrouillage (3), qui est au contact de l'organe de retenue à sa position fermée à laquelle l'organe de retenue (1) est attaché à la charge, ne libère l'organe de retenue (1).

6. Système de transport (S) selon la revendication 1, **caractérisé en ce que** l'axe autour duquel l'organe de retenue (1) tourne et l'axe autour duquel l'élément de verrouillage (3) tourne sont dans le même plan horizontal qui, en utilisation, est parallèle au sol du véhicule aérien.

7. Système de transport (S) selon la revendication 1, **caractérisé en ce que** la surface de l'organe de retenue (1) de laquelle l'élément de verrouillage (3) est au contact et la surface de l'élément de verrouillage (3) au contact de ladite surface de l'organe de retenue (1) sont compatibles l'une avec l'autre.

8. Système de transport (S) selon la revendication 7, **caractérisé en ce que** la surface de l'organe de retenue (1) de laquelle l'élément de verrouillage (3) est au contact et la surface de l'élément de verrouillage (3) au contact de ladite surface de l'organe de retenue (1) sont de forme cylindrique.

9. Système de transport (S) selon la revendication 1, **caractérisé en ce qu'**il comprend deux organes de retenue (1), deux éléments de verrouillage (3), deux organes de guidage (4), deux premiers ressorts (Y1) reliés aux organes de retenue (1) et deux seconds ressorts (Y2) reliés aux éléments de verrouillage (3), qui sont tous agencés de manière à être symétriques par rapport à un axe passant à travers l'élément de déplacement (2).

10. Système de transport (S) selon la revendication 9, **caractérisé en ce qu'**il comprend au moins un organe de blocage de mouvement ayant au moins un boîtier dans lequel l'élément de déplacement (2) est positionné.

11. Système de transport (S) selon la revendication 1, **caractérisé en ce qu'**il comprend au moins une première partie (5), qui vient au contact de l'élément de déplacement (2) au fur et à mesure du déplacement de l'élément de déplacement (2), qui est configurée pour être reliée à un véhicule aérien depuis un point, et qui peut effectuer un mouvement rotationnel autour dudit point.

12. Système de transport (S) selon la revendication 11, **caractérisé en ce qu'**il comprend au moins une partie de came (6), qui est mise, à la position fermée de l'organe de retenue, dans un état actif dans lequel elle est perpendiculaire au sol du système de transport de sorte que l'organe de retenue soit empêché d'être mis à la position ouverte à nouveau, qui vient au contact, sur un côté, de la première partie (5).

13. Système de transport (S) selon la revendication 12, **caractérisé en ce qu'**il comprend au moins un verrouillage de sécurité (S2) duquel la partie de came (6) est au contact lorsque l'organe de retenue (1) est à sa position fermée et empêchant toute libération volontaire ou involontaire de la charge après le chargement du véhicule aérien.

14. Système de transport (S) selon la revendication 11, **caractérisé en ce qu'**il comprend au moins une seconde partie (7), qui est reliée au moins à une extrémité à la première partie (5) et au moins à l'autre extrémité à l'élément de verrouillage (3), et qui permet à l'élément de verrouillage (3) de tourner sous l'effet du mouvement rotationnel de la première partie (5).
